# EUROPEAN PATENT APPLICATION

(11) **EP 4 653 974 A1**
(43) Date of publication of application: **26.11.2025**
(21) Application number: 24744685.9
(22) Date of filing: 17.01.2024
(51) Int. Cl.: G05D 1/249, B65G 1/00

(54) **UNMANNED CONVEYING SYSTEM**

(30) Priority: 20.01.2023 JP 2023007710
(71) Applicant: ANGEL GROUP CO., LTD., Higashiomi-shi Shiga 527-0232 (JP)
(72) Inventor: SHIGETA, Yasushi, Higashiomi-shi, Shiga 527-0232 (JP)
(74) Representative: Bardehle Pagenberg Partnerschaft mbB Patentanwälte Rechtsanwälte
(86) International application number: PCT/JP2024/001173
(87) International publication number: WO 2024/154764

(57) **Abstract**

The present invention aims to provide a new unmanned transport system for transporting a weight object to a destination location on the premise that it travels on a designated flow line.

An unmanned transport system (100) is configured to transport a weight object (53) by traveling on a designated virtual flow line (210) to a designated destination location and comprises: an unmanned transport vehicle (300) configured to travel unmanned according to a control signal; one or more cameras (10) configured to image a field (50) on which the unmanned transport vehicle (300) is to travel from above the field (50) to generate a still image or video; and an operation control means (20) configured to generate the control signal for controlling such that the unmanned transport vehicle (300) travels on the virtual flow line (210) based on the still image or video. The operation control means (20) comprises: a detecting portion (21) configured to detect the unmanned transport vehicle (300) from the still image or video; a position grasping portion (22) configured to grasp a position of the unmanned transport vehicle (300) in the field (50) without being based on a sensor equipped with the unmanned transport vehicle (300) using a result of a detection by the detecting portion (21); and a control portion (24) configured to generate the control signal based on the position of the unmanned transport vehicle (300) which the position grasping portion (22) grasps.

## Description

### CROSS-REFERENCE OF RELATED APPLICATIONS

This application claims the benefit of Patent Application No. 2023-7710 filed in Japan on January 20, 2023, the contents of which applications are incorporated herein by reference.

### TECHNICAL FIELD

The present invention relates to an unmanned transport system (i.e., automated guided system) configured to transport a weight object by traveling on a designated flow line to a designated destination location.

### BACKGROUND

Conventionally, an unmanned transport vehicle (i.e., automated guided vehicle, AGV) is used for transporting a weight object in a predetermined field such as a factory, warehouse, etc. In the conventional unmanned transport system, a flow line (or path, route) on which the unmanned transport vehicle should travel is designated with a tape or the like. The unmanned transport vehicle travels along this tape while detecting the tape, whereby traveling on the designated flow line to transport the weight object to a destination location in the field.

In the field, there may be a case where the destination location is needed to be changed. In this case, the flow line is also needed to be changed. However, when changing the flow line, the tape installed on the field is needed to be re-installed, and then, a working burden is heavy.

In particular, in a case where the unmanned transport vehicle is a forklift configured to transport the weight object put on a pallet together with the pallet, since intervals between stored weight objects are changed when sizes of the pallets are changed, shifts in the destination locations occur, and such changing in the destination location is frequently performed. Therefore, it becomes extremely large that the burden of re-installing the tape and the like which serve as the flow line each time the sizes of the pallets are changed.

As the unmanned transport vehicle, there is an autonomous traveling transport vehicle configured not to travel along the designated flow line, but to travel so as to aim at the destination location while performing an autonomous travel by grasping a surrounding environment (obstruction, etc.) using sensing. However, it is dangerous that the unmanned transport vehicle transporting the weight object can freely travel on a path in a field where a human is also passing through, such as a factory or warehouse.

### SUMMARY OF THE INVENTION

The present invention aims to provide a new unmanned transport system for transporting a weight object to a destination location on the premise that it travels on a designated flow line.

An unmanned transport system according to an aspect of the present invention is an unmanned transport system configured to transport a weight object by traveling on a designated virtual flow line to a designated destination location, and having a configuration comprising: an unmanned transport vehicle configured to travel unmanned according to a control signal; one or more cameras configured to image a field on which the unmanned transport vehicle is to travel from above the field to generate a still image or video; and an operation control means configured to generate the control signal for controlling such that the unmanned transport vehicle travels on the virtual flow line based on the still image or video, and wherein the operation control means comprises: a detecting portion configured to detect the unmanned transport vehicle from the still image or video; a position grasping portion configured to grasp a position of the unmanned transport vehicle in the field without being based on a sensor equipped with the unmanned transport vehicle using a result of a detection by the detecting portion; and a control portion configured to generate the control signal based on the position of the unmanned transport vehicle which the position grasping portion grasps.

In the above unmanned transport system, the unmanned transport vehicle may be a forklift vehicle configured to lift and transport the weight object placed on a pallet together with the pallet.

In the above unmanned transport system, the field may be indoors, and the one or more cameras may be mounted on a ceiling or wall and configured to image the field from above.

In the above unmanned transport system, the field may be outdoors, and the one or more cameras may be mounted on an outdoor structure and configured to image the field from above.

In the above unmanned transport system, the operation control means may further comprise an orientation grasping portion configured to grasp an orientation of the unmanned transport vehicle based on the still image or video, and the control portion may be configured to generate the control signal based also on the orientation grasped by the orientation grasping portion.

In the above unmanned transport system, the unmanned transport vehicle may be configured to perform an autonomous operation for loading or unloading of the weight object at the destination location.

In the above unmanned transport system, the detecting portion of the operation control means may be configured to further detect an obstruction from the still image or video, and the control portion of the operation control means may be configured to further generate the control signal based also on a result of a detection by the detecting portion.

In the above unmanned transport system, the unmanned transport vehicle may include a manipulating portion which a user is to manipulate in order to start traveling on the flow line, and the control portion of the operation control means may be configured to start generating the control signal in accordance with a manipulation to the manipulating portion.

In the above unmanned transport system, the unmanned transport system may comprise a plurality of unmanned transport vehicles whose destination locations and virtual flow lines are designated respectively, the detecting portion of the operation control means may be configured to detect the plurality of unmanned transport vehicles from the still image or video, the position grasping portion of the operation control means may be configured to grasp respective positions of the plurality of unmanned transport vehicles in the field, and the control portion of the operation control means may be configured to generate the control signal for each of the plurality of unmanned transport vehicles based on the plurality of positions grasped by the position grasping portion.

The above unmanned transport system may comprise a plurality of cameras whose fields of view are different form each other, and the position grasping portion may be configured to grasp the position of the unmanned transport vehicle in the field by integrating a plurality of still images or videos generated by the plurality of cameras.

In the above unmanned transport system, the detecting portion may be configured to detect the unmanned transport vehicle by using a neural network.

In the above unmanned transport system, the unmanned transport vehicle may include a predetermined mark on a top surface thereof, and the detecting portion may be configured to detect the unmanned transport vehicle by detecting the predetermined mark.

In the above unmanned transport system, the operation control means may be configured to store a map of the field in which the flow line is defined, and the position grasping portion may be configured to grasp the position of the unmanned transport vehicle by mapping the unmanned transport vehicle detected by the detecting portion on the map.

The above unmanned transport system may comprise a predetermined mark at a predetermined position in the field, the detecting portion may be configured to detect the predetermined mark, and the position grasping portion may be configured to grasp the position of the unmanned transport vehicle based on the predetermined mark which the detecting portion detects.

In the above unmanned transport system, the detecting portion of the operation control means may be configured to further detect the weight object being transported by the unmanned transport vehicle.

In the above unmanned transport system, the unmanned transport vehicle may include: an in-vehicle detecting portion for detecting a surrounding obstruction; and an emergency stop processing portion configured to perform an emergency stop processing of the unmanned transport vehicle based on a detection of the obstruction by the in-vehicle detecting portion.

The above unmanned transport system may further comprise a derailment judging means configured to judge whether or not the unmanned transport vehicle deviates from the flow line, and the operation control means may be configured to generate the control signal so as to stop the unmanned transport vehicle or return the unmanned transport vehicle to the flow line when it is judged in the derailment judging means that the unmanned transport vehicle deviates from the flow line.

In the above unmanned transport system, the derailment judging means may include: an in-vehicle camera equipped with the unmanned transport vehicle and configured to image surroundings around the unmanned transport vehicle to generate the still image or video; and a judging portion configured to judge whether or not the unmanned transport vehicle deviates from the flow line based on the still image or video generated by the in-vehicle camera.

In the above unmanned transport system, the derailment judging means may include: a receiving instrument configured to receive a positioning signal; and a judging portion configured to judge whether or not the unmanned transport vehicle deviates from the flow line based on the positioning signal received by the receiving instrument.

### BRIEF DESCRIPTION OF DRAWINGS

FIG. 1 is a plan view showing a field to which an unmanned transport system is applied, according to an embodiment of the present invention.
FIG. 2 is a side view showing the field to which the unmanned transport system is applied, according to the embodiment of the present invention.
FIG. 3 is a perspective view showing an unmanned transport vehicle in the unmanned transport system according to the embodiment of the present invention.
FIG. 4 is a block diagram showing a configuration of the unmanned transport system according to the embodiment of the present invention.
FIG. 5A is a view showing an example of a change in a flow line according to the embodiment of the present invention.
FIG. 5B is a view showing the example of the change in the flow line according to the embodiment of the present invention.
FIG. 6 is a side view showing another example of a field to which the unmanned transport system is applied, according to the embodiment of the present invention.

### DESCRIPTION OF THE PREFERRED EMBODIMENTS

Embodiments according to the present invention are described below with reference to drawings. The embodiments described below show examples when implementing the present invention, and do not limit the present invention to specific configurations described below. In implementing the present invention, specific configurations according to the embodiments may be adopted appropriately.

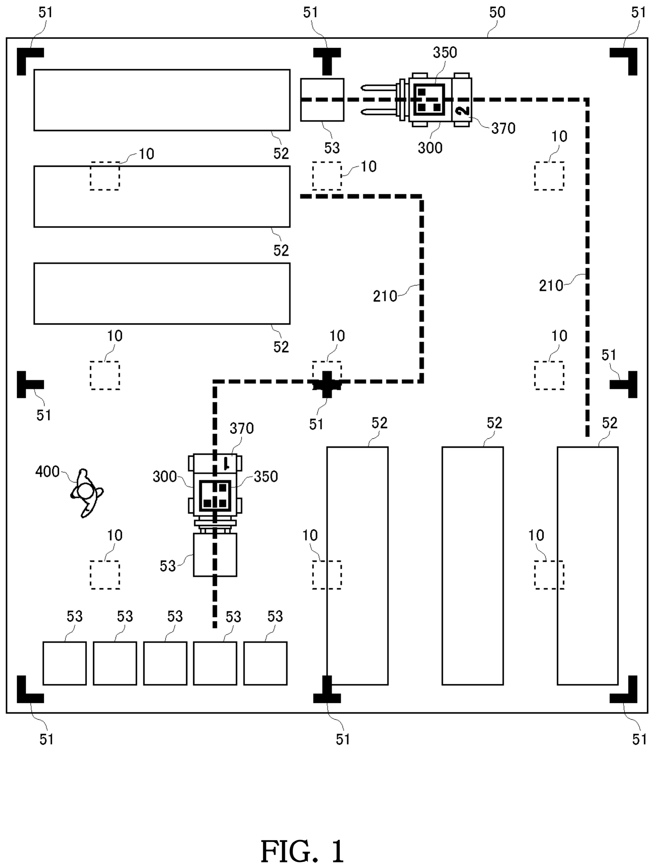

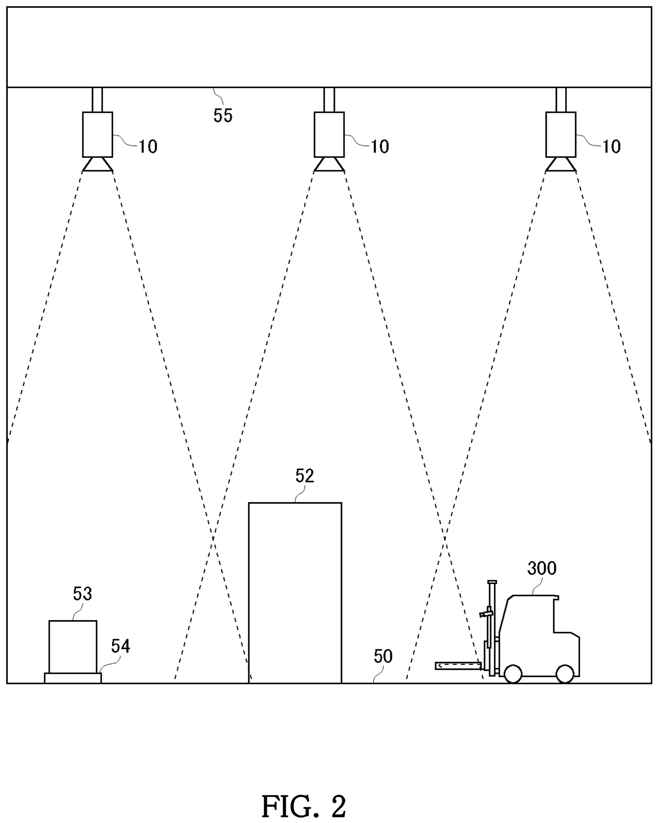

FIG. 1 is a plan view showing a field to which an unmanned transport system is applied, according to an embodiment of the present invention, and FIG. 2 is a side view showing the field to which the unmanned transport system is applied, according to the embodiment of the present invention. As a field 50 to which the unmanned transport system (i.e., automated guided system) according the present embodiment is applied, a factory, warehouse, or the like is expected. In the present invention, an unmanned transport vehicle (i.e., automated guided vehicle, AGV) 300 is a forklift vehicle configured to lift and transport a weight object 53 placed on a pallet 54 together with the pallet 54.

The unmanned transport vehicle 300 transports the weight object, traveling on a designated virtual flow line, toward a designated destination location, in the field 50. In the field 50, for example, manufacturing equipment 52 is installed, and a worker 400 may being walking. The manufacturing equipment 52 and worker 400 may be obstructions as the unmanned transport vehicle 300 travels within the field 50. The weight object 53 and pallet 54 placed in the field 50 can also become obstructions, and in a case where a plurality of unmanned transport vehicles 300 travels in the field 50, any other unmanned transport vehicle 300 can also become an obstruction.

The field 50 is inside a building (indoors), and a plurality of overlooking cameras 10 are mounted on a ceiling 55. The plurality of overlooking cameras 10 images the field 50 from above, respectively. The overlooking cameras 10 may be installed at a wall, pillar, pole, or other high point of the building. In the field 50, a plurality of marks 51 is also provided at positions visible from the overlooking cameras 10.

For each of the plurality of overlooking cameras 10, areas of the field 50 which the overlooking cameras 10 can image are partially overlapped (referring to FIG. 2), whereby the imaged areas of the plurality of overlooking cameras 10 covers the entire field 50. It is not necessarily required to image the entire field 50, and some areas which are not imaged by any of the overlooking cameras 10 are included in the field 50. That is, areas of the field 50 where the unmanned transport vehicle 300 is not scheduled to travel may not be included in the imaged area of any of the overlooking cameras 10.

The unmanned transport vehicle 300 loads at a loading position and unloads at a destination location, and then, transports the weight object 53 to the destination location with the loading position as a starting location. The unmanned transport vehicle 300 which completed the transporting returns to the loading position in a state where it is not carrying the weight object 53, for the next transport. In this case, the unmanned transport vehicle 300 moves with the unloading position as the starting location and the loading position as the destination location (a non-loading returning travel). In the unmanned transport system according to the present embodiment, such travel for the transporting of the weight object 53 and the non-loading returning travel of the unmanned transport vehicle 300 is performed unmanned.

A virtual flow line 210 is set in the field 50. It is noted that this flow line 210 is virtual and is not provided as a physical entity in the field 50. In a case of a conventional unmanned transport system in which a flow line as a physical entity (hereinafter referred to as a "physical flow line") is set in the field 50, an unmanned transport vehicle 300 can follow the physical flow line and travel to a destination location by traveling such that it does not deviate from the physical flow line while detecting the physical flow line.

However, in such conventional unmanned transport system, when the travel route of the unmanned transport vehicle 300 is changed, the physical flow line is needed to be changed, and then, its working burden is heavy. Therefore, in the unmanned transport vehicle system 100 according to the present embodiment, the virtual flow line 210 is set without using the physical flow line, and the unmanned transport vehicle 300 is controlled such that the unmanned transport vehicle 300 can travel on this virtual flow line 210.

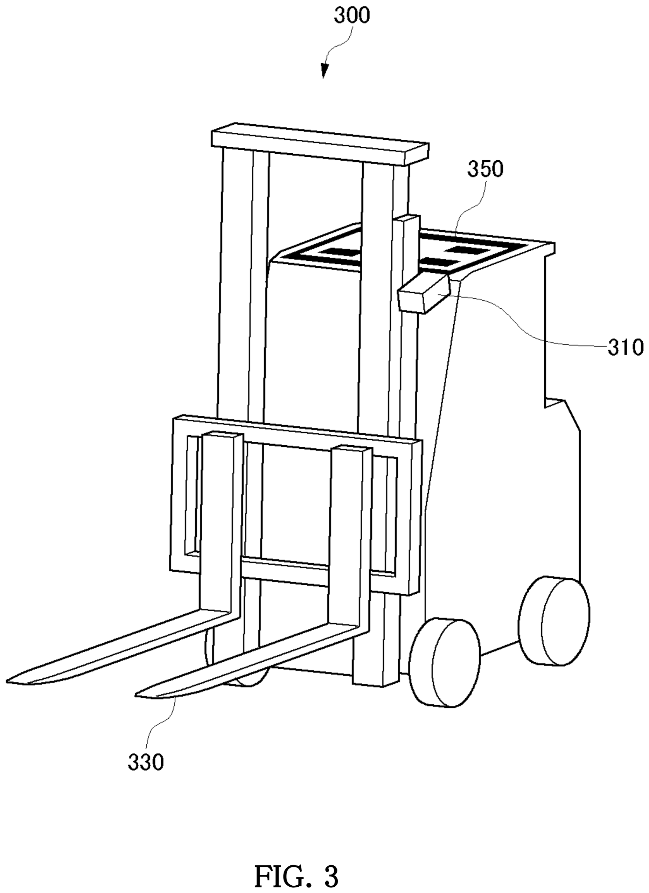

FIG. 3 is a perspective view showing the unmanned transport vehicle in the unmanned transport system according to the embodiment of the present invention. As shown in FIG. 3, the unmanned transport vehicle 300 includes a fork 330 at its front end, and the fork 330 is configured to be movable up and down. An in-vehicle camera 310 capable of imaging the front is mounted in the unmanned transport vehicle 300 in order to image surroundings of the unmanned transport vehicle 300. Moreover, a mark 350 is provided on the upper surface of the unmanned transport vehicle 300.

Moreover, individual identification information is given to each of the unmanned transport vehicles 300, and this identification information is expressed on the upper surface of the unmanned transport vehicle 300 as an identification information notation 370 such that it can be imaged by the overlooking cameras 10 above. In the example in FIG. 1, the two unmanned transport vehicles 300 are given the identification information "1" and "2", respectively, and the identification information notations 370 representing the identification information are marked on the top surfaces of the unmanned transport vehicles 300. The identification information notation 370 may be a code generated by encoding the identification information (e.g., bar code, two-dimensional code, etc.).

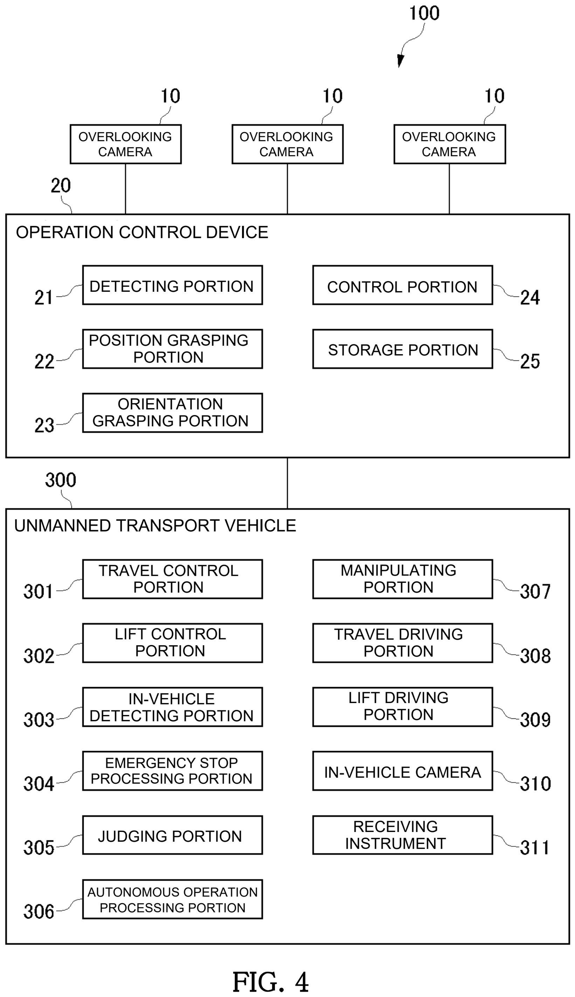

FIG. 4 is a block diagram showing a configuration of the unmanned transport system according to the embodiment of the present invention. As shown in FIG. 4, the unmanned transport system 100 according to the present embodiment includes the plurality of overlooking cameras 10, an operation control portion 20, and the unmanned transport vehicle 300. The plurality of overlooking cameras 10 are connected to the operation control device 20 by wired cables, respectively. The overlooking camera 10 images the field 50 on which the unmanned transport vehicle 300 travels, from above the field 50, and then generates a video. The overlooking camera 10 transmits the generated video stream to the operation control device 20 in real time, and the operation control device 20 receives the video streams from the plurality of overlooking cameras 10.

The overlooking camera 10 may be wirelessly connected to the operation control device 20, and transmit and receive the video stream wirelessly. The overlooking camera 10 may also continuously perform still imaging to generate continuous still images, and transmit the generated still images to the operation control device 20 in real time. Unique identification information is assigned to each of the plurality of overlooking cameras 10. The operation control device 20 identifies which of the overlooking cameras 10 the still image or video is from by using the identification information of the overlooking camera 10.

The operation control device 20 generates a control signal for controlling such that the unmanned transport vehicle 300 travels on the virtual flow line 210 based on the still image or video transmitted from the overlooking camera 10, and transmits it to the unmanned transport vehicle 300. The operation control device 20 may be provided within or outside the field 50, or it may be provided in the cloud and communicate with the overlooking camera 10 and the unmanned transport vehicle 300 via the Internet. Furthermore, the operation control device 20 may be provided in the overlooking camera 10 or the unmanned transport vehicle 300. In this way, the operation control device 20 may be located anywhere as long as it can transmit data (the video stream, still image, control signal, etc.) between the overlooking camera 10 and the unmanned transport vehicle 300.

The operation control device 20 includes a detecting portion 21, a position grasping portion 22, an orientation grasping portion 23, a control portion 24, and a storage portion 25. The detecting portion 21 detects the unmanned transport vehicle 300 from the still image or video. Since the operation control device 20 acquires the still images or videos from the plurality of overlooking cameras 10, the detecting portion 21 detects the unmanned transport vehicle 300 from each of the still images or videos obtained from the plurality of overlooking cameras 10.

The detecting portion 21 inputs the still image or video into a learned neural network, whereby detecting the unmanned transport vehicle 300 from the still image or video. In the case where the operation control device 20 acquires the video from the overlooking camera 10, the detecting portion 21 may extract frame images from the video at a predetermined interval and detect the unmanned transport vehicle 300 from those frame images (still images).

Since the predetermined mark 350 is provided on the upper surface of the unmanned transport vehicle 300, the detecting portion 21 may detect the unmanned transport vehicle 300 from the still image or video with this mark 350 as a clue. That is, the detecting portion 21 may detect the mark 350 on the unmanned transport vehicle 300 as the unmanned transport vehicle 300.

The detecting portion 21 further detects the identification information notation 370 of the unmanned transport vehicle 300. As shown in the example in FIG. 1, in the case where the identification information is expressed in characters (including numbers), the detecting portion 21 performs character recognition on the detected identification information notation 370, whereby identifying the identification information of the detected unmanned transport vehicle 300. In the case where the identification information is expressed as the code information, the detecting portion 21 decodes the detected identification information notation 370 whereby identifying the identification information of the detected unmanned transport vehicle 300. The mark 350 may also double as the identification information notation 370.

The position grasping portion 22 grasps a position of the unmanned transport vehicle 300 in the field 50 by using a result of the detection by the detecting portion 21. Although the unmanned transport vehicle 300 is equipped with an in-vehicle camera 310, the position grasping portion 22 grasps the position of the unmanned transport vehicle 300 in the field 50 based on the detection result from the still image or video imaged by the overlooking camera 10, without being based on the in-vehicle camera 310 or other in-vehicle sensor equipped with the unmanned transport vehicle 300.

The storage portion 25 stores a map of the field 50. In this map, the flow line along which the unmanned transport vehicle 300 should travel is defined. The position grasping portion 22 maps on this map the unmanned transport vehicle 300 detected by the detecting portion 21, whereby grasping the position of the unmanned transport vehicle 300. For this mapping, a predetermined mark 51 is set at predetermined positions in the field 50 and imaged by the overlooking camera 10. The detecting portion 21 detects the mark 51, and the position grasping portion 22 grasps the position of the unmanned transport vehicle 300 based on the mark 51 detected by the detecting portion 21.

The position grasping portion 22 may integrate the still images or videos of the plurality of areas which are different from each other and acquired from the plurality of overlooking cameras 10, in accordance with the identification information of the overlooking cameras 10, to generate a still image or video of the entire field 50, and grasp the position of the unmanned transport vehicle 300 in the field 50 using such integrated image.

The orientation grasping portion 23 grasps an orientation of the unmanned transport vehicle 300 based on the still image or video. The orientation grasping portion 23 may input the still image or video into a learned neural network, whereby detecting the orientation of the unmanned transport vehicle 300 from the still image or video. The orientation grasping portion 23 may also grasp an orientation of the mark 350 of the unmanned transport vehicle 300 detected by the detecting portion 21, whereby grasping the orientation of the unmanned transport vehicle 300.

The control portion 24 generates the control signal to control the travelling of the unmanned transport vehicle 300 based on the position of the unmanned transport vehicle 300 which the position grasping portion 22 grasps and the orientation of the unmanned transport vehicle 300 which the orientation grasping portion 23 grasps. Specifically, the control portion 24 generates the control signal including an instruction of a forward moving, stopping, or steering based on the position and orientation of the unmanned transport vehicle 300 such that the unmanned transport vehicle 300 travels toward the destination location on the flow line 210 defined in the map. The generated control signal is transmitted in real time to the corresponding unmanned transport vehicle 300.

The unmanned transport vehicle 300 receives the control signal from the operation control device 20 and travels in accordance with the control signal. The unmanned transport vehicle 300 includes a travel control portion 301, a lift control portion 302, an in-vehicle detecting portion 303, an emergency stop processing portion 304, a judging portion 305, an autonomous operation processing portion 306, a manipulating portion 307, a travel driving portion 308, a lift driving portion 309, an in-vehicle camera 310, and a receiving instrument 311.

The travel driving portion 308 includes a power source, a power transmission mechanism, a steering mechanism, a speed change mechanism, a braking mechanism, wheels, and the like for traveling the unmanned transport vehicle 300. The lift driving portion 309 includes a drive source and power transmission mechanism for moving the fork 330 up and down, a child lock mechanism for fixing the fork 330 in a predetermined position, and the like. The travel driving portion 308 is driven in accordance with controlling by the travel control portion 301. The lift driving portion 309 is driven in accordance with controlling by the lift control portion 302.

The travel control portion 301 drives the travel driving portion 308 in accordance with the control signal received from the operation control device 20, whereby performing controlling in order that the unmanned transport vehicle 300 travels along the set virtual flow line 210. In the unmanned transport vehicle system 100 according to the present embodiment, what is necessary for the unmanned transport vehicle 300 to travel along the virtual flow line 210 is the travel control portion 301 and travel driving portion 308, and the other elements (e.g., the in-vehicle detecting portion 303 and in-vehicle camera 310) are additional elements.

The in-vehicle detecting portion 303 is used for an emergency stop of the unmanned transport vehicle 300. The in-vehicle detecting portion 303 may be, for example, an infrared sensor or LiDAR. When there is an obstruction in front of a traveling direction of the unmanned transport vehicle 300, the in-vehicle detecting portion 303 detects it. Alternatively, when there is an obstruction around in all directions of the unmanned transport vehicle 300 not limiting to in front of the traveling direction, the in-vehicle detecting portion 303 may detect it.

The emergency stop processing portion 304 performs emergency stop processing of the unmanned transport vehicle 300 when the in-vehicle detecting portion 303 detects the obstruction. As the emergency stop processing, the emergency stop processing portion 304 specifically controls the traveling drive portion 308 to stop generation of power from the power source and to brake. At this time, since abrupt braking may cause the pallet 54 to come loose from the forks 330 and the heavy load 53 to detach from the unmanned transport vehicle 300, the braking is performed with a strength so as not to cause such accident.

The obstruction may be detected by the operation control device 20, and the control signal may be generated by the control portion 24, taking into account the presence of this obstruction. In this case, the detecting portion 21 detects the obstruction from the still image or video obtained from the overlooking camera 10. The control portion 24 generates the control signal based also on the result of the detection of the obstruction by the detecting portion 21.

At this time, in the present embodiment, controlling such that the unmanned transport vehicle 300 travels deviating from the set flow line 210 to avoid the obstruction are not performed, and when the unmanned transport vehicle 300 cannot travel on the flow line 210 due to the obstruction, it is stopped on the place. This is because the unmanned transport vehicle 300 according to the present embodiment transports the weight object 53, and it is undesirable from a safety perspective that the unmanned transport vehicle 300 travel in an arbitrary space, deviating from the flow line 210 which was set in advance. At this time, the unmanned transport vehicle 300 may activate an alarm not shown and sound an alarm in order to inform surroundings around the unmanned transport vehicle 300 that it cannot move forward on the flow line 210 due to the obstruction.

As is above, in the unmanned transport system 100 according to the present embodiment, the unmanned transport vehicle 300 can travel on the set virtual flow line 210 by controlling the travel of the unmanned transport vehicle 300 based on the still image or video obtained by the overlooking camera 10, and if there is an obstruction in a travel path of the unmanned transport vehicle 300, the unmanned transport vehicle 300 itself detects it and performs the emergency stop.

Even through the unmanned transport vehicle 300 is in an emergency stop state, the control portion 24 may make the unmanned transport vehicle 300 travel again when recognizing that the event which caused the unmanned transport vehicle 300 the emergency stop state is resolved. As in the past, in a case where a human determines that the event which caused the unmanned transport vehicle 300 the emergency stop state is resolved and processing to resume travelling from the emergency stop state depends on a manual operation, its reliability becomes very low. The control portion 24 may recognize that the event which caused the emergency stop state is resolved when the obstruction is no longer detected by the in-vehicle detecting portion 303 or in-vehicle camera 310 of the unmanned transport vehicle 300, or it may recognize that the event which caused the emergency stop state is resolved based on the still image video of the overlooking camera 10.

As is described above, it is generally expected that the unmanned transport vehicle 300 travels or stops while being always on the flow line 210. However, it is also expected that the unmanned transport vehicle 300 may deviate (derail) from the flow line 210 for some reason. Therefore, the unmanned transport system 100 according to the present embodiment has a function for determining a derailment of the unmanned transport vehicle 300.

The control portion 24 judges whether or not the position grasped by the position grasping portion 22 deviates from the flow line 210 defined in the map stored in the storage portion 25. When judging that the position deviates from the flow line 210, the control portion 24 generates the control signal to stop the unmanned transport vehicle 300 and return the unmanned transport vehicle 300 to the flow line 210.

In this way, the operation control device 20 may grasp the position of the unmanned transport vehicle 300 based on the still image or video from the overlooking camera 10 and judge the derailment, but in addition to or instead of this, it may include a derailment judging system not using the still image or video from the overlooking camera 10. In this case, the control portion 24 also generates the control signal to stop the unmanned transport vehicle 300 and return the unmanned transport vehicle 300 to the flow line 210 in accordance with judging by the derailment judging system that the unmanned transport vehicle 300 deviates from the flow line 210.

A first derailment judging system is formed of the in-vehicle camera 310 and the judging portion 305. The in-vehicle camera 310 is equipped with the unmanned transport vehicle 300 and images around the unmanned transport vehicle 300 to generate a still image or video. The judging portion 305 judges whether or not the unmanned transport vehicle 300 deviates from the flow line 210 based on the still image or video generated by the in-vehicle camera 310. Specifically, the judging portion 305 judges whether or not the image of the in-vehicle camera 310 is an image which should be imaged when the unmanned transport vehicle 300 is in the flow line 210, whereby judging whether or not the unmanned transport vehicle 300 deviates from the flow line 210.

A second derailment judging system is formed of the receiving instrument 311 and the judging portion 305. The receiving instrument 311 receives a positioning signal propagating within the field 50. The positioning signal is generated within the field 50. Various conventional indoor positioning techniques were proposed and employed, and any conventional indoor positioning technique may be employed as the second derailment judging system.

For example, the receiving instrument 311 may receive a Wi-Fi radio wave as the positioning signal. In this case, a plurality of base stations transmitting the Wi-Fi radio waves are installed in the field 50. The receiving instrument 311 receives the Wi-Fi radio waves from the plurality of base stations, and the judging portion 305 grasps the position of the unmanned transport vehicle 300 from differences in strength of the Wi-Fi radio waves which are from the plurality of base stations and received by the receiving instrument 311, and maps it in the map in which the flow line 210 is defined, thereby judging whether or not the unmanned transport vehicle 300 deviates from the flow line 210 defined in the map.

Moreover, for example, the receiving instrument 311 may receive a positioning signal from a beacon installed in the field 50. In this case, a plurality of beacons is installed in the field 50. The judging portion 305 grasps the position of the unmanned transport vehicle 300 within the field 50 based on strength of the positioning signals received from the plurality of beacons, respectively, and maps it in the map in which the flow line 210 is defined, whereby judging whether or not the unmanned transport vehicle 300 deviates from the flow line 210 defined in the map.

The derailment judging system may use any other conventional positioning technique, such as positioning using magnetic sensor, positioning using IMES (Indoor MEssaging System) based on the same principle as GPS, positioning using PDR (Pedestrian Dead Reckoning), positioning using visible light, positioning using ultrasonic, etc.

As is above, in the unmanned transport system 100 according to the present embodiment, while it is principle to make the unmanned transport vehicle 300 travel on the virtual flow line 210, it is possible to control the travel of the unmanned transport vehicle 300 to return to the flow line 210 by detecting the derailment even though it derailed due to some reason.

When the unmanned transport vehicle 300 transports the weight object 53, the weight object 53 is loaded onto the unmanned transport vehicle 300 at the starting location and the weight object 53 is unloaded from the unmanned transport vehicle 300 at the destination location. When the unmanned transport vehicle 300 turns from the unloading location to the loading location, the weight object 53 is unloaded from the unmanned transport vehicle 300 at the starting location and the weight object 53 is loaded onto the unmanned transport vehicle 300 at the destination location.

The unmanned transport vehicle 300 may perform autonomously these loading and unloading at the stating location and destination location. The autonomous operation processing portion 306 of the unmanned transport vehicle 300 performs an autonomous operation for loading and unloading of the weight object 53 at the starting location or destination location. For this purpose, when performing the non-loading returning travel to arrive at the starting location, the autonomous operation processing portion 306 detects the weight object 53 to be loaded from an image of the in-vehicle camera 310 by analyzing the image. The autonomous operation processing portion 306 controls the travel driving portion 308 and the lift driving portion 309 according to the detected weight object 53 to perform the loading.

When performing the transport operation to reach at the destination location, the autonomous operation processing portion 306 detects a position at which it should perform the unloading from an image of the in-vehicle camera 310 by analyzing the image. The autonomous operation processing portion 306 controls the travel driving portion 308 and the lift driving portion 309 according to the detected position where it should perform the unloading to perform the unloading.

The unmanned transport vehicle 300 includes the manipulating portion 307 for a user to operate to start the traveling on the flow line 210. When an operation to start the traveling is performed by the user to the manipulating portion 307, an operation signal is sent from the unmanned transport vehicle 300 to the operation control device 20. The control portion 24 which received the operation signal starts generating the control signal. In the case where the loading and unloading are performed by the autonomous operation as described above or a case where the loading and unloading are not performed by the autonomous operation and the loading and unloading are performed by a manual manipulation, the control portion 24 may start the travelling control in accordance with the operation signal. The manipulating portion 307 may be a terminal independent of the unmanned transport vehicle 300, for example, a tablet terminal. In the case where the loading and unloading are performed by the autonomous operation, the traveling may be started automatically when the loading or unloading is completed without depending on the operation signal from the manipulating portion 307.

As is described above, the plurality of unmanned transport vehicles 300 to which the different destination locations and different flow lines are designated, respectively, are placed in the field 50, and the operation control device 20 controls the plurality of unmanned transport vehicles 300 simultaneously. For this purpose, the detecting portion 21 detects the plurality of unmanned transport vehicles 300 from the still image or video of the overlooking camera 10. The position grasping portion 22 grasps the respective positions of the plurality of unmanned transport vehicles 300 in the field 50. The control portion 24 generates the control signal for each of the plurality of unmanned transport vehicles 300 based on the plurality of positions grasped by the position grasping portion 22.

In this way, it is possible to control simultaneously the plurality of unmanned transport vehicles 300 in the single field 50. By considering any other unmanned transport vehicle 300 as an obstruction, when there is another unmanned transport vehicle 300 in front of the travelling direction of one unmanned transport vehicle 300, the another unmanned transport vehicle 300 may be detected as the obstruction and the one unmanned transport vehicle 300 can be made to make an emergency stop. In this way, it possible to set the virtual flow lines 210 set for the plurality of unmanned transport vehicles 300 so as to intersect each other.

In the above embodiment, when controlling the plurality of unmanned transport vehicles 300 simultaneously, by providing the identification information notations 370 on the upper surfaces of the unmanned transport vehicles 300, the operation control device 20 detects the identification information notation 370 from the still image or video of the overlooking camera 10, grasps the position of each unmanned transport vehicle 300, and generates the control signal for each of the unmanned transport vehicles 300. That is, the identification information notations 370 are used for controlling each of the unmanned transport vehicles 300 individually. Alternatively, it may be a configuration in which the unmanned transport vehicle 300 does not include the identification information notation 370.

In this case, the unmanned transport vehicle 300 transmits a in-vehicle camera image of the in-vehicle camera 310 to the operation control device 20. The control portion 24 of the operation control device 20 analyzes the in-vehicle camera image, whereby recognizing which of the unmanned transport vehicle 300's positions the image is from. In this way, the operation control device 20 can recognize that the unmanned transport vehicle 300 detected from the image of the overlooking camera 10 and the unmanned transport vehicle 300 which sent the in-vehicle camera image are the same unmanned transport vehicle 300. Then, it becomes possible for the operation control device 20 to send the control signal for each of the unmanned transport vehicles 300 detected from the images of the overlooking camera 10 to the corresponding unmanned transport vehicle 300.

The detecting portion 21 described above may not only detect the unmanned transport vehicle 300 from the still image or video, but also the weight object being transported by the unmanned transport vehicle 300. Whereby, it is possible to check whether the unmanned transport vehicle 300 is transporting the weight object 53, that is, whether it is in the transporting or the non-loading returning traveling, and whether the weight object 53 being transported falls from the unmanned transport vehicle 300.

As is explained above, by the unmanned transport system 100 according to the present embodiment, since the position of the unmanned transport vehicle 300 is grasped using the overlooking camera 10 and the travelling of the unmanned transport vehicle 300 is controlled referring to the map, it is possible for the unmanned transport vehicle 300 to travel along the virtual flow line 210 from the starting location to the destination location without using the physical flow line. This is effective, in particular, in the case where it is necessary to change the flow line. This is because it is not necessary to physically change the flow line in the field 50, but only necessary to change the flow line on the map, when changing the flow line. Here, a situation to change the flow line will be explained.

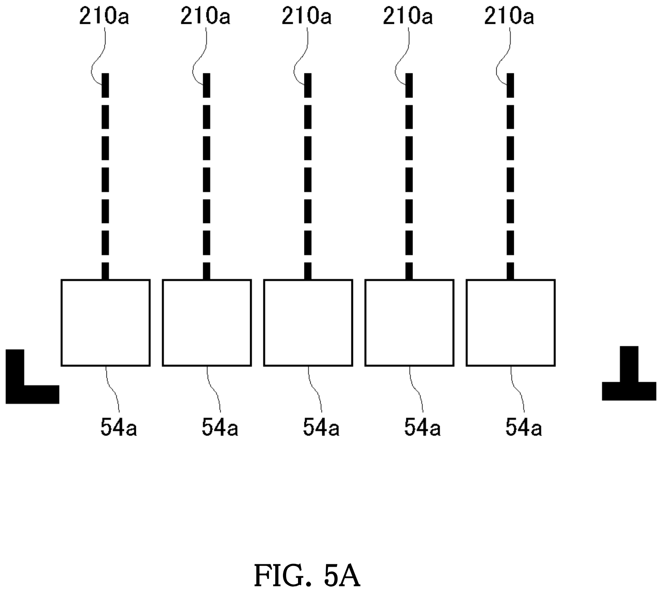

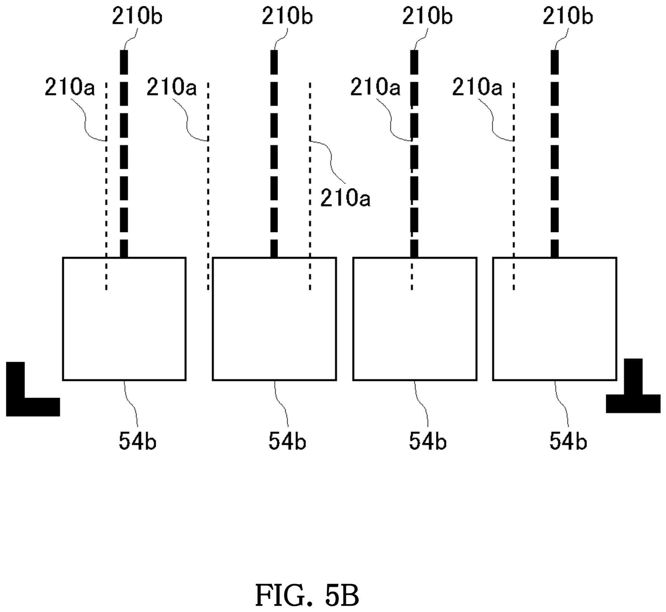

FIGs. 5A and 5B are views showing an example of the change in the flow line according to the embodiment of the present invention. In the example in FIG. 5A, relatively small pallets 54 (weight objects 53) are transport targets, and in the example in FIG. 5B, relatively large pallets 54 (weight objects 53) are transport targets, and so when the weight objects 53 are stored side by side at the destination location, a distance between adjacent weight objects 53, that is, a distance between the flow lines 210 toward the storage location of the adjacent weight objects (destination location) are different from each other. In the example in FIG. 5A, the distance between the flow lines 210a toward the storage location which is the destination location is relatively short, and in the example in FIG. 5B, the distance between the flow lines 210b toward the storage location which is the destination location is relatively long.

In a state in which the weight object 53 is being transported with such field 50 and weight object 53 being target, when the size of the pallets 54 (weight objects 53) is changed, the distance between the flow lines 210 is also needed to be changed. For example, when the size of the pallets 54 (weight objects 53) is increased, the distance between the flow lines 210 is also needed to be increased, and the flow lines is needed to be changed from the flow lines 210a shown in FIG. 5A to the flow lines 210b shown in FIG. 5B. In such a case, by the present embodiment, since both flow lines 210a and flow lines 210b are not physically provided in the actual field 50, but are defined on the map stored in the storage portion 25, it is possible to easily change.

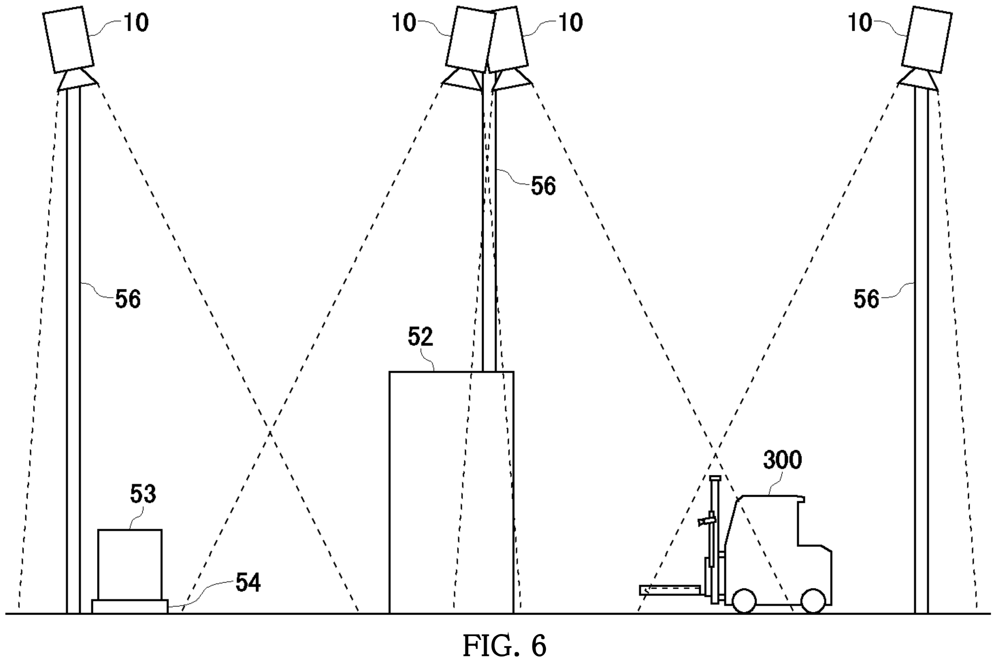

FIG. 6 is a side view showing another example of a field to which the unmanned transport system is applied, according to the embodiment of the present invention. In the above embodiment, the example in which the field 50 is inside the building and the overlooking camera 10 is mounted on the ceiling 55 is explained, but the unmanned transport system 100 according to the present embodiment can also be used outdoors. In this case, however, since there is no ceiling, the overlooking camera 10 is mounted on a high location of a pole 56, an exterior wall of the building, or other tall structure to image the field 50.

### (Variant examples)

The control portion 24 may control a speed of the unmanned transport vehicle 300 based on the still image or video of the overlooking camera 10. The detecting portion 21 detects the obstructions (including the worker 400, manufacturing equipment 52, stored weight object 53, other unmanned transport vehicle 300, etc.) together with the unmanned transport vehicle 300 which is a control target, from the still image or video of the overlooking camera 10. When there are no obstructions within a predetermined range around the unmanned transport vehicle 300 which is the control target, the control portion 24 generates the control signal to make it travel with its travel speed increased. Alternatively, since the unmanned transport vehicle 300 travels on the flow line 210, the control portion 24 may judge the presence or absence of the obstructions within a predetermined range along the flow line 210 from the unmanned transport vehicle 300.

In this way, it is possible to shorten a cycle time of the transport working by increasing the speed of the unmanned transport vehicle 300 while confirming that surroundings around the unmanned transport vehicle 300 are safe. This is effective in a factory to improve production efficiency. As the controlling of the speed, for example, controlling may be performed such that the unmanned transport vehicle 300 travels at a relatively low speed when moving forward with the fork 330 in front of it and at a relatively high speed when moving backward toward the opposite side of the fork 330.

In the case controlling so as to change the speed in accordance with the presence or absence of the surrounding obstruction in this way, controlling based on the still image or video from the overlooking camera 10 is also effective. That is, in a case confirming safety by detecting the surrounding obstruction by a sensor mounted on the unmanned transport vehicle 300 (in-vehicle camera, LiDAR, etc.), since there may be a case where it is not possible to detect the obstruction due to a blind spot of the sensor, or a case where it is not possible to detect the obstruction relatively far away, it is not possible to ensure safety. Then, it is possible to set a necessary range around the unmanned transport vehicle 300 and check whether there is an obstruction within that range, by using the overlooking camera 10.

Regardless of whether there is an obstruction around the unmanned transport vehicle 300, a speed may be set for each section in the flow line defined on the map, and the control signal may be generated in accordance with the speed set on the map based on the position of the unmanned transport vehicle 300. For example, a relatively high speed may be set for a section which does not intersect with the flow line 210 of other unmanned transport vehicle 300, and a relatively low speed may be set for a section which intersects with the flow line 210 of other unmanned transport vehicle 300 or cross an area where the worker 400 is passing through.

The above operation control device 20 may be realized by a computer, and the detecting portion 21, position grasping portion 22, orientation grasping portion 23, and control portion 24 may be functions realized by executing one or more operation control programs according to the present embodiment with a processor. The travel control portion 301, lift control portion 302, emergency stop processing portion 304, judging portion 305, and autonomous operation processing portion 306 of the unmanned transport vehicle 300 may be functions realized by executing one or more operation control programs according to the present embodiment with a processor.
The travel control portion 301, lift control portion 302, emergency stop processing portion 304, judging portion 305, and autonomous operation processing portion 306 do not necessarily have to be provided in the unmanned transport vehicle 300, and, for example, they may be provided in a service provider in the cloud, and the unmanned transport vehicle 300 may communicate with the service provider.

In the above embodiment, the unmanned transport vehicle 300 is the forklift, but the unmanned transport vehicle 300 is not limited to this and may be a wagon type or cart type transport vehicle, for example. In this case, the loading and unloading may be performed by the worker 400.

### DESCRIPTION OF THE REFERENCES

- 10: Overlooking camera
- 20: Operation control device
- 21: Detecting portion
- 22: Position grasping portion
- 23: Orientation grasping portion
- 24: Control portion
- 25: Storage portion
- 50: Field
- 51: Mark
- 52: Manufacturing equipment
- 53: Weight object
- 210: Flow line
- 300: Unmanned transport vehicle
- 301: Travel control portion
- 302: Lift control portion
- 304: Emergency stop processing portion
- 305: Judging portion
- 306: Autonomous operation processing portion
- 307: Manipulating portion
- 308: Travel driving portion
- 309: Lift driving portion
- 310: In-vehicle camera
- 311: Receiving instrument
- 330: Fork
- 350: Mark
- 370: Identification information notation
- 400: Worker

## Claims

1. An unmanned transport system configured to transport a weight object by traveling on a designated virtual flow line to a designated destination location, the unmanned transport system comprising:
an unmanned transport vehicle configured to travel unmanned according to a control signal;
one or more cameras configured to image a field on which the unmanned transport vehicle is to travel from above the field to generate a still image or video; and
an operation control means configured to generate the control signal for controlling such that the unmanned transport vehicle travels on the virtual flow line based on the still image or video, and
wherein the operation control means comprises:
a detecting portion configured to detect the unmanned transport vehicle from the still image or video;
a position grasping portion configured to grasp a position of the unmanned transport vehicle in the field without being based on a sensor equipped with the unmanned transport vehicle using a result of a detection by the detecting portion; and
a control portion configured to generate the control signal based on the position of the unmanned transport vehicle which the position grasping portion grasps.

2. The unmanned transport system according to claim 1, wherein the unmanned transport vehicle is a forklift vehicle configured to lift and transport the weight object placed on a pallet together with the pallet.

3. The unmanned transport system according to claim 1, wherein
the field is indoors, and
the one or more cameras are mounted on a ceiling or wall and configured to image the field from above.

4. The unmanned transport system according to claim 1, wherein
the field is outdoors, and
the one or more cameras are mounted on an outdoor structure and configured to image the field from above.

5. The unmanned transport system according to claim 1, wherein
the operation control means further comprises an orientation grasping portion configured to grasp an orientation of the unmanned transport vehicle based on the still image or video, and
the control portion is configured to generate the control signal based also on the orientation grasped by the orientation grasping portion.

6. The unmanned transport system according to claim 1, wherein the unmanned transport vehicle is configured to perform an autonomous operation for loading or unloading of the weight object at the destination location.

7. The unmanned transport system according to claim 1, wherein
the detecting portion of the operation control means is configured to further detect an obstruction from the still image or video, and
the control portion of the operation control means is configured to further generate the control signal based also on a result of a detection by the detecting portion.

8. The unmanned transport system according to claim 1, wherein
the unmanned transport vehicle includes a manipulating portion which a user is to manipulate in order to start traveling on the flow line, and
the control portion of the operation control means is configured to start generating the control signal in accordance with a manipulation to the manipulating portion.

9. The unmanned transport system according to claim 1, wherein
the unmanned transport system comprises a plurality of unmanned transport vehicles whose destination locations and virtual flow lines are designated respectively,
the detecting portion of the operation control means is configured to detect the plurality of unmanned transport vehicles from the still image or video,
the position grasping portion of the operation control means is configured to grasp respective positions of the plurality of unmanned transport vehicles in the field, and
the control portion of the operation control means is configured to generate the control signal for each of the plurality of unmanned transport vehicles based on the plurality of positions grasped by the position grasping portion.

10. The unmanned transport system according to claim 1, wherein
the unmanned transport system comprises a plurality of cameras whose fields of view are different form each other, and
the position grasping portion is configured to grasp the position of the unmanned transport vehicle in the field by integrating a plurality of still images or videos generated by the plurality of cameras.

11. The unmanned transport system according to claim 1, wherein the detecting portion is configured to detect the unmanned transport vehicle by using a neural network.

12. The unmanned transport system according to claim 1, wherein
the unmanned transport vehicle includes a predetermined mark on a top surface thereof, and
the detecting portion is configured to detect the unmanned transport vehicle by detecting the predetermined mark.

13. The unmanned transport system according to claim 1, wherein
the operation control means is configured to store a map of the field in which the flow line is defined, and
the position grasping portion is configured to grasp the position of the unmanned transport vehicle by mapping the unmanned transport vehicle detected by the detecting portion on the map.

14. The unmanned transport system according to claim 1, wherein
the unmanned transport system comprises a predetermined mark at a predetermined position in the field,
the detecting portion is configured to detect the predetermined mark, and
the position grasping portion is configured to grasp the position of the unmanned transport vehicle based on the predetermined mark which the detecting portion detects.

15. The unmanned transport system according to claim 1, wherein the detecting portion of the operation control means is configured to further detect the weight object being transported by the unmanned transport vehicle.

16. The unmanned transport system according to claim 1, wherein
the unmanned transport vehicle includes:
an in-vehicle detecting portion for detecting a surrounding obstruction; and
an emergency stop processing portion configured to perform an emergency stop processing of the unmanned transport vehicle based on a detection of the obstruction by the in-vehicle detecting portion.

17. The unmanned transport system according to claim 1, wherein
the unmanned transport system further comprises a derailment judging means configured to judge whether or not the unmanned transport vehicle deviates from the flow line, and
the operation control means is configured to generate the control signal so as to stop the unmanned transport vehicle or return the unmanned transport vehicle to the flow line when it is judged in the derailment judging means that the unmanned transport vehicle deviates from the flow line.

18. The unmanned transport system according to claim 17, wherein
the derailment judging means includes:
an in-vehicle camera equipped with the unmanned transport vehicle and configured to image surroundings around the unmanned transport vehicle to generate the still image or video; and
a judging portion configured to judge whether or not the unmanned transport vehicle deviates from the flow line based on the still image or video generated by the in-vehicle camera.

19. The unmanned transport system according to claim 17, wherein
the derailment judging means includes:
a receiving instrument configured to receive a positioning signal; and
a judging portion configured to judge whether or not the unmanned transport vehicle deviates from the flow line based on the positioning signal received by the receiving instrument.
